# EUROPEAN PATENT APPLICATION

(11) **EP 4 241 575 A1**
(43) Date of publication of application: **13.09.2023**
(21) Application number: 21889084.6
(22) Date of filing: 26.10.2021
(51) Int. Cl.: A23L 5/00, A23L 27/20, C12G 3/04

(54) **METHOD FOR PRODUCING DRINK OR FOOD HAVING GREEN NOTE, AND DRINK OR FOOD**

(30) Priority: 04.11.2020 JP 2020184292
(71) Applicant: Panasonic Holdings Corporation, Osaka 571-8501 (JP)
(72) Inventor: SUGIMOTO, Toshikazu, Kashiwa-shi, Chiba 277-0033 (JP); WATANABE, Kentaro, Kashiwa-shi, Chiba 277-0033 (JP); INO, Daisuke, Kadoma-shi, Osaka 571-8501 (JP); FUJITA, Hirofumi, Kadoma-shi, Osaka 571-8501 (JP)
(74) Representative: Eisenführ Speiser
(86) International application number: PCT/JP2021/039409
(87) International publication number: WO 2022/097531

(57) **Abstract**

A problem of the present invention is to provide a simple method for producing food or drink having green flavor. A solution for the problem is a method for producing food or drink having green flavor, comprising a step A of photocatalytically treating a lipid containing a fatty acid having 10 to 18 carbon atoms and a step B of heating the photocatalytically-treated product obtained in step A.

## Description

### TECHNICAL FIELD

The present invention relates to a method for producing food or drink having green flavor, and particularly to a method for producing distilled liquor having green flavor.

### BACKGROUND ART:

Green leaf aldehyde (i.e. (2E)-hexenal which is unsaturated aldehyde) is known as a component that generates flavor generally called fragrance of green (Non Patent Documents 1 and 2). The green leaf aldehyde is contained in vegetables and fruit as a component forming "grassy" or "leafy" fragrance among fragrances of food.

Characteristic fragrances identified in high-quality scotch whiskey include "green" fragrance, and in a flavor wheel used for specifically expressing flavor of whiskey, "Green/Grassy" is written as large classification (innermost ring) of flavor, and "Herbal, Leafy" is written as middle classification (intermediate ring) (Non Patent Document 3).

Non Patent Document 4 indicates that results of analyzing malt whiskey using multidimensional gas chromatography-mass spectrometer/olfactometry (MDGC-MS-O) show that E,Z-2,6-nonenal, E-2-nonenal, 1-octene-3-ol, 4-heptene-1-ol and nonane-2-ol contribute to green fragrance.

Whiskey does not contain green leaf aldehyde. Nevertheless, there are products having green fragrance as a feature. Green leaf aldehyde is characterized by freshening grass-like fragrance, whereas sensorily felt "green fragrance" of whiskey presents fragrance like that of fresh or dry grass. A mechanism of generation of a green aroma in whisky has not been unraveled.

Patent Document 1 relates to a product having green fragrance, a method for obtaining the product, and an alcoholic beverage containing the product. Patent Document 1 discloses a method for obtaining a product having green fragrance, the method including applying lipoxygenase to an unsaturated fatty acid in a culture medium, the product thereof, and an alcoholic beverage containing the product. In Patent Document 1, practically, a solution having green fragrance to whiskey or distilled spirit, and a sensory test was conducted. As a result, it was found that when flavoring changed taste of the distilled liquor, and green flavor was perceived, there was an advantage that the taste became sweet and better.

### Patent Document

Patent Document 1: JP 2005-21055 A

### Non Patent Documents

Non Patent Document 1: Akikazu Hatanaka, "Fragrance of Plant Origin", FFI Journal, No. 168, 1996, pages. 5 to 22
Non Patent Document 2: Akikazu Hatanaka, "Through the 5th Memorial Symposium "Why humans are refreshed by fragrance of green!"", FFI Journal, No. 198, 2002, pages 45 to 55
Non Patent Document 3: "The Oxford Handbook of Food Fermentations" edited by Charles W. Bamforth and Robert E. Ward, Oxford University Press, 2014, pages 238 to 241
Non Patent Document 4: Akira Wanikawa et al., "Identification of green note compounds in malt whisky using multidimensional gas chromatography", Flavour Fragr. J., 2002, No. 17, pages 207 to 211
Non Patent Document 5: Hiroshi Kaneko et al., "Lipids of Yeast", the Journal of Japan Oil Chemists' Society, Vol. 20, No. 10, 1971, pages 687 to 694
Non Patent Document 6: Yoko Murakami et al., "Lipid Composition of Commercial Baker's Yeasts Having Different Freeze-tolerance in Frozen Dough", Biosci. Biotech. Biochem, 1996, Vol. 60, No. 11, pages 1874 to 1876

### SUMMARY

### Problems to be Solved by the Invention

The method for producing a product having green flavor in Patent Document 1 requires complicated operations of, for example, preparing an appropriate culture medium, providing koji mold serving as an enzyme source, performing and carrying out an enzyme reaction. Therefore, efficiency for generating a product having green flavor is very low, and the cost for implementation is high.

In Patent Document 1, a generated distillation product with a green aroma is added to commercially available distilled spirit or whiskey to produce whiskey or distilled spirit having green flavor. That is, the product having green flavor in Patent Document 1 is used as a flavoring agent. On the other hand, use of additives such as a flavoring agent is often prohibited in the production of distilled liquor such as whiskey (Non Patent Document 3). As described above, the product having green flavor in Patent Document 1 is used for limited applications, and has low practicality.

In addition, how food or drink such as distilled liquor is produced to enhance green flavor thereof has not been clarified yet.

The present invention solves the above-described problems of conventional techniques, and an object of the present invention is to provide a method for producing food or drink having green flavor, which is simple in operation and excellent in practicality.

### Solutions to the Problems

The present inventors have found that a linear saturated aliphatic aldehyde, particularly a linear saturated aliphatic aldehyde having 6 to 10 carbon atoms contributes to green fragrance of whiskey, and the present inventors have found a method for adding a green aroma, which is simple and has particularly high practicality in production of distilled liquor.

The present invention provides a method for producing food or drink having green flavor, comprising a step A of photocatalytically treating a lipid containing a fatty acid having 10 to 18 carbon atoms and a step B of heating the photocatalytically-treated product obtained in step A.

In a certain embodiment, the lipid is derived from yeast cells.

In a certain embodiment, the lipid contains a phospholipid of a fatty acid having 10 to 18 carbon atoms.

In a certain embodiment, the photocatalyst contains titanium oxide.

In a certain embodiment, a lipid peroxide is generated in the step A.

In a certain embodiment, a linear saturated aliphatic aldehyde having 6 to 10 carbon atoms in the step B.

In a certain embodiment, the step B is carried out under a substantially oxygen-free environment.

In a certain embodiment, the step B is carried out by distilling fermenting mash containing the photocatalytically treated product.

In a certain embodiment, the food or drink is distilled liquor.

The present invention also provides a method for producing food or drink having green flavor, comprising a step of incorporating a photocatalytically-treated and heated lipid containing a fatty acid having 10 to 18 carbon atoms.

The present invention also provides a method for producing food or drink having green flavor, comprising a step of heating an object to be reacted, wherein the object to be reacted is a photocatalytically treated product of a lipid containing a fatty acid having 10 to 18 carbon atoms.

The present invention also provides a photocatalytically treated and heated flavoring agent for food or drink, comprising a lipid containing a fatty acid having 10 to 18 carbon atoms, wherein the flavoring agent has green flavor.

The present invention also provides photocatalytically treated and heated food or drink comprising a lipid containing a fatty acid having 10 to 18 carbon atoms, wherein the food or drink has green flavor.

### Effects of the Invention

The method for producing food or drink having green flavor according to the present invention may be incorporated into a general process for producing distilled liquor, and is simple in operation. In addition, in the method of the present invention, food or drink having green flavor may be produced either as flavor or as distilled liquor. Therefore, the present invention is widely applied, and is excellent in practicality.

### BRIEF DESCRIPTION OF DRAWINGS

Fig. 1 is a process chart showing an example of a method for producing distilled liquor using the present invention;
Fig. 2 is a process chart showing another example of a method for producing distilled liquor using the present invention;
Fig. 3 is a process chart showing another example of a method for producing distilled liquor using the present invention; and
Fig. 4 is a sectional view showing an example of a structure of a reactor that is used for photocatalyst treatment.

### DETAILED DESCRIPTION

In the method of the present invention, a fatty acid having 10 to 18 carbon atoms is photocatalytically treated in an aqueous liquid, and the photocatalytically treated fatty acid is thermally decomposed to generate a linear saturated aliphatic aldehyde having 6 to 10 carbon atoms. It suffices that one of linear saturated aliphatic aldehydes having 6 to 10 carbon atoms is generated. In a preferred embodiment, all of linear saturated aliphatic aldehydes having 6, 7 and 9 carbon atoms are generated. In a more preferred embodiment, all of linear saturated aliphatic aldehydes having 6 to 9 carbon atoms are generated. In a still more preferred embodiment, all of linear saturated aliphatic aldehydes having 6 to 10 carbon atoms are generated.

The linear saturated aliphatic aldehydes having 6 to 10 carbon atoms are preferably 1-hexanal, 1-heptanal, 1-octanal, 1-nonanal and 1-decanal, respectively. Hereinafter, at least one aldehyde selected from the group consisting of 1-hexanal, 1-heptanal, 1-octanal, 1-nonanal and 1-decanal is sometimes referred to as "green aldehyde".

As a raw material that is photocatalytically treated, a lipid containing a fatty acid having 10 to 18 carbon atoms may be used. Lipids containing a fatty acid having 10 to 18 carbon atoms include free fatty acids having 10 to 18 carbon atoms, esters of a fatty acid having 10 to 18 carbon atoms and glycerol (i.e. neutral lipids), monovalent esters of a fatty acid having 10 to 18 carbon atoms and a higher alcohol (i.e. wax), complex esters of a fatty acid having 10 to 18 carbon atoms, alcohol, phosphoric acids and a nitrogen compound (i.e. phospholipid), and complex esters of a fatty acid having 10 to 18 carbon atoms, alcohol, sugar and a nitrogen compound (i.e. glycolipid).

Preferred raw materials that are photocatalytically treated include fatty acids having 10 to 18 carbon atoms, esters of a fatty acid having 10 to 18 carbon atoms, and phospholipids having 10 to 18 carbon atoms.

For example, yeast has a phospholipids in the cells irrespective of a type thereof. The phospholipid in yeast cells has an unsaturated fatty acid as a constituent component. Compositions of fatty acids forming a film lipid of yeast are described in Non Patent Document 5, page 689, Table 1. A part of them is shown below.
Capric acid (C10): < 1%
Lauric acid (C12): < 1%
Myristic acid (C14): 3 ± 0.6%
Palmitic acid (C16: 0): 7 ± 0.5%
Palmitoleic acid (C16: 1): 53 ± 1%
Stearic acid (C18: 0): 2 ± 0.5%
Oleic acid (C18: 1): 35 ± 1%

Compositions of lipids of bakery yeast are described in Non Patent Document 6, page 1875, Table II. As components of lipids of yeast strains, neutral lipids, free fatty acids, sterols and phospholipids are shown together with contents thereof.

Therefore, yeast may be used as a raw material that is photocatalytically treated. A yeast decomposition products obtained by decomposing yeast cells may also be used as a raw material that is photocatalytically treated. Specific examples of the yeast decomposition product include residues obtained by extracting an extract from yeast cells, and yeast cell walls which are dried products thereof.

The yeast that may be used in the method of the present invention is not particularly limited as long as it is a type of yeast having a lipid containing a fatty acid having 10 to 18 carbon atoms in the cells. Examples of such yeast include genus Candida yeast, genus Pichia yeast, and genus Kluyveromyces yeast. Among these yeasts, those used as beer yeast, whiskey yeast or wine yeast are preferable, and ale beer yeast and whiskey yeast having a high content of unsaturated fatty acids are particularly preferable.

Preferably, properties of yeast used as a raw material that is photocatalytically treated are those of press yeast or dry yeast. The cells are collected from a cell suspension using a filter such as a rotary vacuum dehydrator or a filter press, and dehydrated to prepare squeezed yeast cells having a moisture content of from 60 to 75% (hereinafter, referred to as a press yeast), or the press yeast is further dried with a dryer to prepare dried yeast cells having a moisture content of 2 to 12%.

The photocatalytic treatment is performed by adding a raw material to be photocatalytically treated to an aqueous liquid, and irradiating the mixture with light for exciting the photocatalyst while bringing the mixture into contact with the photocatalyst. The aqueous liquid refers to a liquid containing water and having fluidity. The aqueous liquid blocks reactants from oxygen, and functions as a medium that transfers heat to the reactants. The aqueous liquid may be water, an aqueous solution, or a heterogeneous mixture containing a solid. The aqueous liquid may contain alcohol.

In the photocatalytic treatment, the function of the photocatalyst is exhibited by irradiation with excitation light such as ultraviolet light. Therefore, it is preferable that a reaction reagent other than the photocatalyst is not added to the aqueous liquid. Preferably, titanium dioxide is used as the photocatalyst. Titanium dioxide is excellent in chemical stability, and troubles such as decomposition and elution do not occur.

A basic principle of a photochemical reaction using titanium dioxide as a catalyst will be briefly described. When a solid surface of titanium dioxide is irradiated with light having an excitation light wavelength, excitation of electrons from a ground state into an excited state occurs. In the excited state, holes are generated in the vicinity of an upper limit of a charge electron band and excited electrons are generated in the vicinity of a lower limit of a conduction band in the titanium dioxide solid. The excited electrons and the holes migrate from the inside of the titanium dioxide solid to the surface thereof, and react with foreign molecules. The raw material to be photocatalytically treated, such as a fatty acid having 10 to 18 carbon atoms, is oxidized by a photocatalytic reaction to change into a lipid peroxide.

As a form in which the photocatalyst is brought into contact with the raw material to be photocatalytically treated, for example, one of a suspended state and an immobilized state may be adopted. For the suspended state contact form, a powdered photocatalyst is mixed in an aqueous liquid containing a raw material to be photocatalytically treated. For the immobilized state contact form, a powdered photocatalyst is immobilized as a photocatalyst film on a surface of a reaction vessel, and the reaction vessel is filled with an aqueous liquid containing a raw material to be photocatalytically treated.

An amount of the photocatalyst used is from 0.01 to 5 wt% in terms of a concentration in the aqueous liquid. If the amount of the photocatalyst is less than 0.05 wt% of the aqueous liquid, the photocatalytic reaction does not sufficiently proceed, and if the amount of the photocatalyst is more than 5 wt%, unintended side reactions increase. The amount of the photocatalyst used is preferably from 0.05 to 3 wt%, more preferably from 0.1 to 1 wt% of the aqueous liquid.

The excitation light with which the photocatalyst is irradiated is, for example, light having any wavelength between 254 nm and 365 nm when the photocatalyst is titanium dioxide. Time of irradiation with the excitation light is appropriately adjusted in consideration of wavelength and light intensity of a light source. This prevents excessively oxidation of the raw material to be photocatalytically treated.

As an evaluation index for adjustment of reaction time, an amount of generation of linear saturated aliphatic aldehyde and results of sensory evaluation on food may be used. For suppressing an unintended side reaction of the raw material to be photocatalytically treated, it is preferable to perform the photocatalytic treatment with the aqueous liquid maintained at a temperature lower than 25°C.

Subsequently, the photocatalytically treated raw material, i.e. the photocatalytically treated product is used as an object to be reacted, and is heated. By heating the photocatalytically treated product, the lipid peroxide generated by the photocatalytic treatment is decomposed to generate green aldehyde. The heating of the photolytically treated product is performed in an aqueous liquid. Here, the photocatalytically treated product may be heated in the aqueous liquid subjected to the photocatalytic treatment, or may be transferred to another aqueous liquid, and heated.

It suffices that temperature for heating the photocatalytically treated product is temperature at which the generated lipid peroxide is decomposed. From the viewpoint of decomposition efficiency, heating temperature is preferably 70°C or higher, more preferably from 80 to 110 °C, still more preferably from 90 to 100°C when heating is performed at normal pressure. When heating is performed under reduced pressure, it is desirable to perform heating at from 40 to 70°C. The heating of the photocatalytically treated product may be performed by distilling the aqueous liquid.

For example, when food or drink is distilled liquor, the heating of the photocatalytically treated product may be performed by distilling fermenting mash as an aqueous liquid containing a photocatalytically treated product. The fermenting mash is an intermediate material of an alcoholic beverage which is obtained by fermenting a starch raw material, malted rice, water and yeast. The amount of the photocatalytically treated product that is contained in the fermenting mash distilled is appropriately determined in consideration of a degree of a green aroma to be generated. In general, photocatalytically treated product is incorporated in the fermenting mash in an amount of from 0.01 to 10% (w/v), preferably from 0.05 to 3% (w/v), more preferably from 0.1 to 1.5% (w/v).

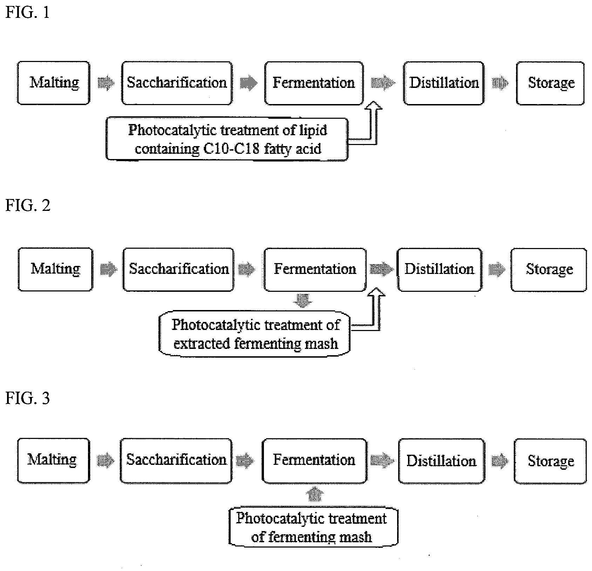

Fig. 1 is a process chart showing an example of a method for producing distilled liquor using the present invention. That is, first, raw materials including cereals and a saccharification enzyme are blended and pulverized if appropriate (malting). The prepared raw material is mixed with water and heated to saccharify starch (saccharification). Yeast is added to the resulting saccharified solution to ferment the resulting fermenting mash (fermentation). The photocatalytically treated product is added to the fermented fermenting mash.

The fermenting mash containing the photocatalytically treated product is distilled to obtain a distillate containing an ethanol fraction (distillation). The obtained distillate is stored (storage).

In this method, the raw material to be photocatalytically treated is photocatalytically treated in a process different from a process for producing distilled liquor. In the photocatalytic treatment, the raw material is incorporated in the aqueous liquid in an amount of from 0.1 to 50% (w/v), preferably from 0.5 to 20% (w/v), more preferably from 1 to 10% (w/v).

Fig. 2 is a process chart showing another example of a method for producing distilled liquor using the present invention. As shown here, the fermenting mash containing the aqueous liquid may be prepared by extracting a part of the fermenting mash in the process of fermentation, performing photocatalytic treatment, and then returning this part to the fermenting mash immediately before distillation. The other steps are the same as those in the method of Fig. 1.

Fig. 3 is a process chart showing another example of a method for producing distilled liquor using the present invention. As shown here, the fermenting mash containing the aqueous liquid may be prepared by photocatalytically treating the fermenting mash in the process of fermentation. The other steps are the same as those in the method of Fig. 1.

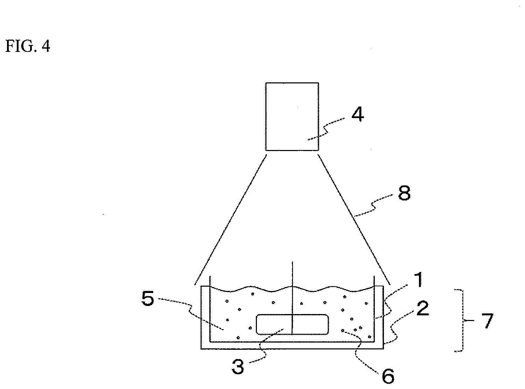

Fig. 4 is a sectional view showing an example of a structure of a reactor that is used for photocatalyst treatment. This reactor includes a reaction vessel 1 that is filled with an aqueous liquid, a cooling unit 2 mounted in the reaction vessel, a stirrer 3 for stirring the aqueous liquid, and a light source 4 for irradiating the aqueous liquid. Reaction vessel 1 is filled with the aqueous liquid 5, and photocatalyst particles 6 are dispersed in the aqueous liquid 5. The light source 4 irradiates a catalytic reaction unit 7 with excitation light 8.

Specific examples of the distilled liquor include whiskey, distilled spirit, brandy, and spirits such as zin, vodka and ram. The distilled liquor is particularly preferably whiskey. Since characteristic fragrances identified in high-quality scotch whiskey include "green" fragrance, green flavor is useful for applications in which whiskey excellent in palatability is produced.

The fermenting mash in which the aqueous liquid containing the photocatalytically treated product is incorporated is preferably one after fermentation is completed. If dried yeast is incorporated in the fermenting mash before completion of fermentation, the amount of the lipid peroxide may be reduced by a metabolic action of the yeast.

The distillation of the fermenting mash containing the aqueous solution may be performed under conditions that are commonly used when fermenting mash is distilled in production of distilled liquor. When the distilled liquor is malt whiskey, distillation of fermenting mash, i.e. initial distillation is typically performed by maintaining distillation temperature for 5 to 8 hours, depending on capacity of the vessel. The distillation temperature of fermenting mash is generally 70 to 100°C.

In the distillation step, air in a distiller is discharged to outside the system by heated steam, leading to creation of a substantially oxygen-free state.

The lipid peroxide is thermally decomposed to generate linear saturated aliphatic aldehydes having 6 to 10 carbon atoms, and further, heating is performed under an oxygen-free environment to promote generation of the linear saturated aliphatic aldehydes. The generated linear saturated aliphatic aldehydes having 6 to 10 carbon atoms are volatile, and may be released from the aqueous liquid. In such a case, the released linear saturated aliphatic aldehydes having 6 to 10 carbon atoms are brought into contact with a medium, so that the aldehydes are dissolved, followed by collection. As a medium for dissolving the linear saturated aliphatic aldehyde having 6 to 10 carbon atoms, water, an alcohol aqueous solution and the like are used. When the aqueous liquid is distilled, the linear saturated aliphatic aldehydes having 6 to 10 carbon atoms are collected in a reflux liquid.

The collected solution in which the linear saturated aliphatic aldehydes having 6 to 10 carbon atoms are dissolved is an aromatic liquid having a green aroma. The fragrance liquid is used as, for example, distilled liquor or a flavoring agent directly or after being adjusted to a concentration at which a more appropriate aroma is presented. The distilled liquor according to the present invention may be used alone or appropriately mixed with liquor to produce distilled liquor, alcoholic beverages and the like having a green aroma. The distilled liquor according to the present invention have an increased green aroma. The flavoring agent according to the present invention may be appropriately mixed with a predetermined component such as drinking water, a sweetener, alcohol, a pigment or carbonic acid to produce soft drink, an alcoholic beverage or the like having green flavor.

### Examples

### <Example 1>

### (Photocatalytic treatment of yeast)

Dehydrated yeast (press yeast) for producing whiskey and titanium oxide powder were suspended in distilled water. Temperature of the mixture was adjusted to predetermined temperature. The mixture whose temperature was adjusted was irradiated with excitation light while being stirred at 10,000 rpm. The mixture irradiated with the light was centrifuged at 3,000 rpm for 10 minutes to obtain solids as samples 1 to 4.

**[Table 1]**

| | Amount of yeast used (g) | Distilled water (ml) | Titanium oxide (g) | Light source | Irradiation time (h) | Temperature (°C) | Light intensity (mW/cm²) |
|---|---|---|---|---|---|---|---|
| Sample 1 | 30 | 270 | 1.08 | Low-pressure mercury lamp | 72 | 5 | 20 |
| Sample 2 | 30 | 270 | 1.08 | Low-pressure mercury lamp | 120 | 5 | 20 |
| Sample 3 | 30 | 270 | 1.08 | BLACK LIGHT | 72 | 5 | 1.5 |
| Sample 4 | 3 | 297 | 1.08 | BLACK LIGHT | 72 | 25 | 1.5 |

| | | | | | | | |
|---|---|---|---|---|---|---|---|
| Titanium oxide powder: "P25" (trade name) manufactured by NIPPON AEROSIL CO., LTD. Low-pressure mercury lamp: "GPH 436T5" (trade name) manufactured by Heraeus, 100 V, 21 W, center wavelength λ = 254 nm, light intensity I of sample surface = 20 mW/cm² BLACK LIGHT: "FL 40SBLB" (trade name) manufactured by TOSHIBA CORPORATION, 100 V, 40 W, center wavelength λ = 365 nm, light intensity I of sample surface = 1.5 mW/cm² | | | | | | | |

### (Production of whiskey)

10 g of yeast (press yeast) for producing whiskey was added to 4 L of wort having a specific gravity of 1.060, fermentation was started at 23°C, and controlled so that maximum temperature was 32°C. The fermentation was performed for 3 days. All the solid were added to the fermenting mash after fermentation was completed. Thereafter, all the fermenting mash containing the solid was distilled twice by a distiller with a capacity of 5 L to obtain whiskey. Concentrations of green aldehydes (1-hexanal, 1-heptanal, 1-octanal, 1-nonanal and 1-decanal) in the obtained whiskey were analyzed. Table 2 shows the analysis results.

**[Table 2]**

| Concentration of green aldehyde in whiskey (ppm) | | | | | |
|---|---|---|---|---|---|
| | Control plot 1 | Experimental plot 1 | Experimental plot 2 | Experimental plot 3 | Experimental plot 4 |
| Solid added | Non-added | Sample 1 | Sample 2 | Sample 3 | Sample 4 |
| 1 -Hexanal | 0.152 | 0.395 | 0.594 | 0.357 | 0.241 |
| 1-Heptanal | 0.039 | 0.471 | 1.493 | 0.422 | 0.149 |
| 1-Octanal | Below detection limit | 0.098 | 0.43 | 0.162 | 0.03 |
| 1-Nonanal | 0.022 | 0.344 | 1.167 | 0.482 | 0.173 |
| 1-Decanal | Below detection limit | 0.038 | 0.051 | 0.041 | Below detection limit |
| Total | 0.213 | 1.346 | 3.735 | 1.464 | 0.593 |

### (Method for analysis of 1-hexanal)

### (1) Sampling

2.5 ml of ultrapure water and 0.5 ml of a distillate were taken into a headspace vial, 75 µL of 63% aqueous EtOH and 50 µl of an internal standard solution (1-pentanal at 2 ppm) were added, and the mixture was used for measurement.

A standard solution (STD) (1-hexanal at 1.64 ppm) is used after being mixed with 2.5 ml of ultrapure water and 0.5 ml of aqueous 63% EtOH. For preparation of a calibration curve, three samples were provided in which the standard solution was added in amounts of 25 µl, 50 µl and 75 µl, respectively.

### (2) Analysis conditions

Apparatus: HS 7697A, GC 6890N and MS 5973 manufactured by Agilent Technologies
Headspace condition: Loop size 3 ml
Temperature (oven 60°C, loop 80°C, transfer line 120°C)
Vial equilibration time: 10 min
Loop equilibration time: 0.01 min
Injection time: 1 min
Injection conditions: pulsed split (20 : 1), 250 kPa, gas saver 30 ml/min (2 min)
Inlet temperature: 150°C
Column: VF-WAXms (Varian) 1 µm × 0.25 mm I.D. × 30 m
Column flow rate: 1.2 ml/min (He, constant flow mode)
Temperature rising condition: 40°C (10 min) → 10°C/min → 240°C (1 min)
MS conditions: temperature (transfer line 230°C, ion source 230°C, quadrupole 150°C)

**[Table 3]**

| Quantitative ion | Target (m/z) | Reference (m/z) |
|---|---|---|
| IS(1-pentanal) | 58 | 43 |
| 1-hexanal | 56 | 72 |

### (Method for analysis of 1-heptanal, 1-octanal, 1-nonanal and 1-decanal)

### (1) Pretreatment

5 ml of the distillate is taken into a centrifuge tube with a volume of 50 ml, 20 µl of IS (Octanal-d16 at 100 ppm) is added, and the mixture was diluted by adding 20 ml of ultrapure water.

A standard solution (STD) (each component at 50 ppm) is used after being mixed with 20 ml of ultrapure water, 5 ml of aqueous 63% EtOH and 20 µl of IS. For preparation of a calibration curve, three samples were provided in which the standard solution was added in amounts of 10 µl, 20 µl and 30 µl, respectively.

These test solutions are applied to a solid phase column (Oasis HLB manufactured by Waters Corporation, 3 cc, 60 mg) conditioned with ethyl acetate, methanol and ultrapure water, and are made to passed through the column at about 1 drop/sec. After the passage of the test solution, the column is washed with 10 ml of ultrapure water, and dried by suction for about 5 minutes. After the drying, the solid phase is removed, the flow path is washed with acetone and dried, a dehydration cartridge (InertsepSlim-JDRY manufactured by GL Sciences Inc.) is set, and the adsorbed solid phase is attached onto the cartridge, and eluted in a quantitative test tube with 6 ml of ethyl acetate. The eluate is concentrated to 0.5 ml or less by nitrogen purge, adjusted to a volume of 1 ml with ethyl acetate, and subjected to GC/MS.

### (2) Analysis conditions

Apparatus: GC 6890N and MS 5973 manufactured by Agilent Technologies
Injection conditions: pulsed split (20 : 1), 250 kPa, gas saver 20 ml/min (2 min)
Temperature: 210°C, Injection amount: 1 µl
Column: Inert Pure WAX (GL Sciences Inc.) 0.25 µm × 0.25 mm I.D. × 30 m
Column flow rate: 1.2 ml/min (He, constant flow mode)
Temperature rising condition: 40°C (3 min) → 8°C/min → 120°C (2 min) → 12°C/min → 230°C (10 min)
MS conditions: temperature (transfer line 230°C, ion source 230°C, quadrupole 150°C)

**[Table 4]**

| Quantitative ion | Target (m/z) | Reference (m/z) |
|---|---|---|
| IS(Octanal d16) | 112 | 96 |
| 1-heptanal | 70 | 81 |
| 1-octanal | 84 | 100,110 |
| 1-nonanal | 57 | 98,82 |
| 1-decanal | 57 | 112,110 |

In principle, the reaction rate of the photocatalytic reaction increases as light intensity becomes higher. In the results of Table 2, comparison between the experimental plot 1 in which irradiation was performed using a mercury lamp with a short wavelength and high light intensity and the experimental plot 3 in which irradiation was performed using BLACK LIGHT with a long wavelength and low light intensity shows that the amount of generation of the linear saturated aldehyde in the experimental plot 3 is equivalent to or a little larger than that in the experimental plot 1, which is not consistent with the principal of photocatalytic reaction.

The reason for such a result may be that in the experimental plot 1, the catalytic reaction proceeds faster than in the experimental plot 3, but photodecomposition of the fatty acid having 10 to 18 carbon atoms or the lipid peroxide proceeds faster, and a rate of the photodecomposition is much higher than that of the catalytic reaction.

### <Example 2>

### (Photocatalytic treatment of yeast)

30 g of yeast (press yeast) for producing whiskey and 1.08 g of titanium oxide powder were suspended in 270 ml of distilled water. The mixture was placed in a refrigerator and temperature was adjusted to 5°C. The mixture whose temperature was adjusted was irradiated with excitation at 5°C for 120 hours light from a low-pressure mercury lamp (GPH 436T5 manufactured by Heraeus, 100 V, 21 W) while being stirred at 10,000 rpm. The irradiated mixture was centrifuged at 3,000 rpm for 10 minutes to obtain a solid.

### (Production of whiskey)

10 g of yeast (press yeast) for producing whiskey was added to 4 L of wort having a specific gravity of 1.060, fermentation was started at 23°C, and controlled so that maximum temperature was 32°C. The fermentation was performed for 3 days. To the fermenting mash after completion of fermentation, the solid was added in an amount giving a concentration (% (w/v)) shown in Table 5. Thereafter, all the fermenting mash containing the solid was distilled twice by a distiller with a capacity of 5 L to obtain whiskey. Concentrations of green aldehydes (1-hexanal, 1-heptanal, 1-octanal, 1-nonanal and 1-decanal) in the obtained whiskey were analyzed. Table 5 shows the analysis results.

**[Table 5]**

| | Experimental plot 5 | Experimental plot 6 | Experimental plot 7 | Experimental plot 8 |
|---|---|---|---|---|
| Amount of solid added | 0.10% | 0.38% | 0.75% | 1.50% |
| 1-Hexanal | 0.186 | 0.264 | 0.377 | 0.734 |
| 1-Heptanal | 0.153 | 0.208 | 0.387 | 0.956 |
| 1-Octanal | 0.011 | 0.035 | 0.092 | 0.28 |
| 1-Nonanal | 0.069 | 0.159 | 0.36 | 0.95 |
| 1-Decanal | Below detection limit | 0.017 | 0.018 | 0.026 |
| Total | 0.419 | 0.683 | 1.234 | 2.946 |

### <Sensory evaluation on whiskey>

Sensory evaluation on the whiskey produced in Examples 1 and 2 was performed by seven panelists specializing in distilled liquor. An evaluation score was an average of scores from five panelists excluding one who gave the highest score and one who gave the lowest score, among the seven panelists.

**[Table 6]**

| Overall evaluation criteria | |
|---|---|
| 10 | Much better than standard distilled liquor |
| 9 | |
| 8 | Better than standard distilled liquor |
| 7 | Slightly better than standard distilled liquor |
| 6 | Comparable to standard distilled liquor |
| 5 | Slightly inferior to standard distilled liquor |
| 4 | Inferior to standard distilled liquor |
| 3 | |
| 2 | Significantly inferior to standard distilled liquor |
| 1 | |

**[Table 7]**

| Green aroma evaluation criteria | |
|---|---|
| 5 | Strongly felt |
| 4 | Slightly strongly felt |
| 3 | Felt |
| 2 | Slightly felt |
| 1 | Not felt |

**[Table 8]**

| Sensory evaluation results | | |
|---|---|---|
| Sample No. | Overall evaluation score (average score) | Green aroma evaluation score (average score) |
| Plot of interest | - | 1.60 |
| Experimental plot 1 | 6.40 | 3.00 |
| Experimental plot 2 | 6.30 | 4.00 |
| Experimental plot 3 | 6.30 | 3.10 |
| Experimental plot 4 | 6.20 | 3.00 |
| Experimental plot 5 | 6.40 | 2.70 |
| Experimental plot 6 | 6.40 | 2.60 |
| Experimental plot 7 | 6.50 | 3.00 |
| Experimental plot 8 | 6.40 | 3.60 |

### Reference Signs List

- 1: Reaction vessel
- 2: Cooling unit
- 3: Stirrer
- 4: Light source
- 5: Aqueous liquid
- 6: Photocatalyst particles
- 7: Catalytic reaction unit
- 8: Excitation light

## Claims

1. A method for producing food or drink having green flavor, comprising a step A of photocatalytically treating a lipid containing a fatty acid having 10 to 18 carbon atoms and a step B of heating the photocatalytically-treated product obtained in step A.

2. The method for producing food or drink having green flavor according to claim 1, wherein the lipid is derived from yeast cells.

3. The method for producing food or drink having green flavor according to claim 1 or 2, wherein the lipid contains a phospholipid of a fatty acid having 10 to 18 carbon atoms.

4. The method for producing food or drink having green flavor according to any one of claims 1 to 3, wherein the photocatalyst contains titanium oxide.

5. The method for producing food or drink having green flavor according to any one of claims 1 to 4, wherein a lipid peroxide is generated in the step (A).

6. The method for producing food or drink having green flavor according to any one of claims 1 to 5, wherein a linear saturated aliphatic aldehyde having 6 to 10 carbon atoms is generated in the step B.

7. The method for producing food or drink having green flavor according to any one of claims 1 to 6, wherein the step B is carried out under a substantially oxygen-free environment.

8. The method for producing food or drink having green flavor according to any one of claims 1 to 7, wherein the step B is carried out by distilling fermenting mash containing the photocatalytically treated product.

9. The method for producing food or drink having green flavor according to any one of claims 1 to 8, wherein the food or drink is distilled liquor.

10. A method for producing food or drink having green flavor, comprising a step of incorporating a photocatalytically-treated and heated lipid containing a fatty acid having 10 to 18 carbon atoms.

11. A method for producing food or drink having green flavor, comprising a step of heating an object to be reacted, wherein the object to be reacted is a photocatalytically treated product of a lipid containing a fatty acid having 10 to 18 carbon atoms.

12. A photocatalytically treated and heated flavoring agent for food or drink, comprising a lipid containing a fatty acid having 10 to 18 carbon atoms, wherein the flavoring agent has green flavor.

13. Photocatalytically treated and heated food or drink, comprising a lipid containing a fatty acid having 10 to 18 carbon atoms, wherein the food or drink has green flavor.
